# EUROPÄISCHE PATENTANMELDUNG

(11) **EP 1 384 840 A1**
(43) Veröffentlichungstag der Anmeldung: **28.01.2004**
(21) Anmeldenummer: 02019674.7
(22) Anmeldetag: 03.09.2002
(51) Int. Cl.: E05B 1/00, A47B 95/02, F16B 7/18

(54) **Griffstange für ein Gerät oder eine Gerätetür**

(30) Priorität: 22.07.2002 DE 10233202
(71) Anmelder: Gronbach Forschung- und Entwicklungs GmbH & Co. KG, 6342 Niederndorf (AT)
(72) Erfinder: Gronbach, Wilfried, 83549 Eiselfing (DE)
(74) Vertreter: Zinnecker, Armin, Dipl.-Ing.

(57) **Zusammenfassung**

Eine Griffstange für ein Gerät oder eine Gerätetür umfaßt ein Gewinde für eine Befestigungsschraube (7). Um eine derartige Griffstange zu verbessern ist das Kernloch (4) für das Gewinde spanlos gestanzt.

## Beschreibung

Die Erfindung betrifft eine Griffstange für ein Gerät oder eine Gerätetüre mit einem Gewinde für eine Befestigungsschraube. Sie betrifft ferner eine Vorrichtung zur Herstellung einer derartigen Griffstange und ein Gerät oder eine Gerätetüre mit einer derartigen Griffstange.

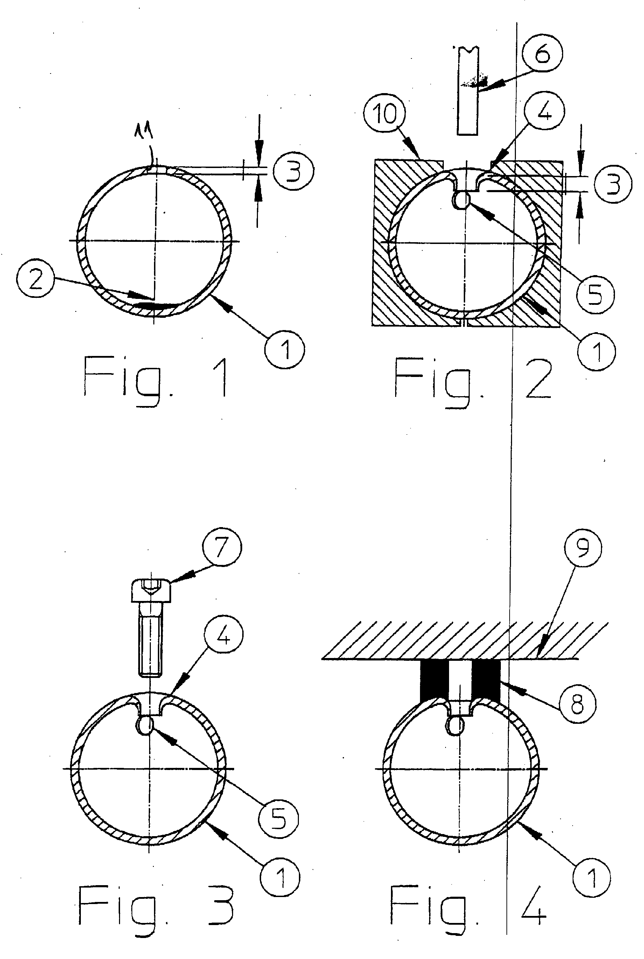

Griffstangen dieser Art sind bereits bekannt. Eine herkömmliche Verbindungsart ist in
- Fig. 1: in einem Querschnitt
dargestellt. Das Rohr 1 ist mittels eines spanenden Fertigungsverfahrens gebohrt. In das dadurch entstandene Bohrloch 11 wird ein Gewinde geschnitten. Das Bohrloch 11 hat jedoch nur eine geringe Tiefe, nämlich die Tiefe der Wandstärke des Rohres 1, so daß die tragende Gewindelänge 3 ebenfalls verhältnismäßig gering ist. Ein weiterer Nachteil der spanenden Bohrbearbeitung besteht darin, daß anfallende Späne und Kühlschmiermittel in das Innere 2 des Rohres 1 gelangen. Dies ist insbesondere dann von Nachteil, wenn, wie bei der Verwendung bei Geräten und Gerätetüren oftmals der Fall, das Rohr 1 nicht offen bleibt, sondern bereits vor dem Einbringen der Gewinde an beiden Enden verschlossen wird, um das Aussehen einer massiven Stange zu erhalten. Die im Inneren 2 des Rohres 1 befindlichen Verunreinigungen können dann nicht ausgewaschen werden. Es besteht die Gefahr, daß sie im Laufe der Zeit durch den Verschluß der Enden nach außen dringen.

Um die tragende Gewindelänge zu vergrößern bestünde die Möglichkeit, mittels eines rotierenden Fließlochformers einen Blechdurchzug herzustellen. Dies wäre allerdings mit dem Nachteil verbunden, daß hierfür ein zusätzlicher Arbeitsgang erforderlich ist und daß eine spezielle Fließloch-Formschraube verwendet werden müßte, die im Vergleich zu einer gewindefurchenden Schraube teurer ist.

Aufgabe der Erfindung ist es, eine verbesserte Griffstange der eingangs angegebenen Art vorzuschlagen.

Erfindungsgemäß wird diese Aufgabe dadurch gelöst, daß das Kernloch für das Gewinde spanlos gestanzt ist. Das Kernloch für das Gewinde wird also durch ein spanloses Verfahren gestanzt. Hierdurch ergibt sich eine tragende Gewindelänge, die größer ist als die ursprüngliche Materialdicke.

Vorzugsweise ist das Kernloch derart gestanzt, daß der Abfallbutzen mit dem Gewindekernloch (Gewindedurchzug) verbunden bleibt. Es wird also verhindert, daß der Abfallbutzen in das Rohrinnere fällt.

Eine Vorrichtung zur Herstellung einer erfindungsgemäßen Griffstange umfaßt eine Spannbacke, die die Griffstange im Bereich außerhalb des Kernlochs umfaßt, und einen Stempel zum Herstellen des Kernlochs. Die Griffstange liegt an der Spannbacke an. Vorteilhaft ist es, wenn die Spannbacke die Griffstange im Bereich außerhalb des Kernlochs vollständig umfaßt. Die Griffstange liegt an der Spannbacke vorzugsweise vollständig an.

Ein Gerät oder eine Gerätetüre, die durch eine erfindungsgemäße Griffstange gekennzeichnet ist, umfaßt vorzugsweise einen Sockel zwischen der Oberfläche des Geräts bzw. der Gerätetür und der Griffstange. Vorteilhaft ist es, wenn der Sockel die in das Gewinde der Griffstange eingreifende Schraube umgibt. Vorzugsweise umgibt der Sockel die Schraube vollständig. Es ist vorteilhaft, wenn der Sockel an der Schraube anliegt.

Eine weitere vorteilhafte Weiterbildung ist dadurch gekennzeichnet, daß der Sockel in den Bereich zwischen der Schraube und der Griffstange eingreift. Durch das spanlose Stanzen des Kernlochs entsteht in dem das Kernloch umgebenden Bereich der Griffstange eine Einziehung. Der Sockel ist vorzugsweise derart ausgestaltet, daß er in diese Einziehung eingreift, wobei der Sockel vorzugsweise derart geformt ist, daß er an dieser Einziehung vorzugsweise vollständig anliegt.

Ein Ausführungsbeispiel der Erfindung wird nachstehend anhand der beigefügten Zeichnung im einzelnen erläutert. In der Zeichnung zeigt
- Fig. 2: eine Vorrichtung zur Herstellung einer Griffstange in einem Querschnitt,
- Fig. 3: eine Griffstange mit einer Schraube in einem Querschnitt und
- Fig. 4: eine an einem Gerät befestigte Griffstange in einem Querschnitt.

Das Griffrohr 1 hat einen kreisrunden Querschnitt. Es ist allerdings möglich auch andere Querschnittsformen wie ovale Querschnitte oder sonstige Querschnittsformen zu verwenden. Die Spannbacke 10 umfaßt die Griffstange 1 im Bereich außerhalb des Kernlochs 4 vollständig. Sie liegt in diesem gesamten Bereich an der Griffstange 1 an. Das Kernloch 4 wird durch eine Bewegung des Stempels 6 nach unten erzeugt. Hierdurch erhält das Kernloch 4 die Form eines Durchzugs bzw. Gewindedurchzugs. Durch eine geeignete Abstimmung von Stempel 6 und Spannbacke 10 kann erreicht werden, daß sich die Deformation am Rohr 1 in Grenzen hält. Diese Deformation tritt praktisch nur in demjenigen Bereich auf, der das Kernloch 4 umgibt, also in demjenigen Bereich, in dem die Spannbacke 10 nicht an der Griffstange 1 anliegt, und möglicherweise noch in einem kleinen unmittelbar daran angrenzenden Bereich. Dieser Bereich, in dem Deformationen auftreten können, kann später durch den Sockel 8 (Fig. 4) abgedeckt werden.

Bei geeigneter Ausführung des Stempels 6 ist es außerdem möglich, daß der Abfallbutzen 5 noch mit dem Kernloch bzw. Gewindedurchzug 4 verbunden bleibt und nicht in das Innere der Griffstange fällt. Durch eine geeignete Ausführung des Stempels 6 ergibt sich ein Kernloch bzw. ein Gewindedurchzug 4 mit einer tragenden Gewindelänge 3 (in Fig. 2), die größer ist als die ursprüngliche Materialdicke.

Die Griffstange 1 wird durch die selbstfurchende Schraube 7 mit dem Gerät 9 verbunden. Zwischen der Oberfläche des Geräts 9 und der Griffstange 1 ist ein Sockel 8 vorhanden, der durch die Verschraubung der Griffstange 1 mit dem Gerät 9 zwischen der Griffstange 1 und dem Gerät 9 eingeklemmt wird. Der Sockel umgibt die Schraube vollständig. Er kann mit seinem Innendurchmesser an der Schraube anliegen. Es kann allerdings auch ein Spiel zwischen dem Außendurchmesser der Schraube 7 und dem Innendurchmesser des Sockels 8 vorgesehen sein. Der Sockel 8 greift in der aus Fig. 4 ersichtlichen Weise in den Bereich zwischen der Schraube 7 und der Griffstange 1 ein.

Durch die Erfindung können folgende Vorteile erreicht werden: Durch das Anformen eines Gewindedurchzugs 4 kann ohne Verlust an Festigkeit der Gewindeverbindung ein Rohr 1 mit geringerer Wandstärke verwendet werden. Für die Herstellung wird kein Kühlschmiermittel benötigt. Statt einer teuren Fließloch-Formschraube kann eine preisgünstige selbstfurchende Schraube 7 verwendet werden. Durch die Form des Gewindedurchzugs bzw. Einzugs 4 ist ein leichteres Ansetzen der Schraube möglich. Die geometrischen Eigenschaften des Gewindeeinzugs 4 bewirken einen selbstsichernden Effekt für die Gewindeverbindung. Der Arbeitsgang "Stanzen" kann in der Regel preisgünstiger durchgeführt werden als der Arbeitsgang "Bohren". Die durch den Stanzvorgang erzeugte Form des Kernlochs kann in Verbindung mit einem geeigneten Sockel 8 für einen zusätzlichen Formschluß zwischen Griffstange 1 und Sockel 8 sorgen.

## Patentansprüche

1. Griffstange für ein Gerät oder eine Gerätetüre mit einem Gewinde für eine Befestigungsschraube (7),
**dadurch gekennzeichnet,**
**daß** das Kernloch (4) für das Gewinde spanlos gestanzt ist.

2. Griffstange nach Anspruch 1, **dadurch gekennzeichnet, daß** das Kernloch (4) derart gestanzt ist, daß der Abfallbutzen (5) mit dem Kernloch (4) verbunden bleibt.

3. Vorrichtung zur Herstellung einer Griffstange (1) nach Anspruch 1 mit einer Spannbacke (10), die die Griffstange (1) im Bereich außerhalb des Kernlochs (4) umfaßt, und einen Stempel (6) zum Herstellen des Kernlochs (4).

4. Vorrichtung nach Anspruch 1, **dadurch gekennzeichnet, daß** die Spannbacke (10) die Griffstange (1) im Bereich außerhalb des Kernlochs (4) vollständig umfaßt.

5. Gerät oder Gerätetüre,
**gekennzeichnet durch**
eine Griffstange (1) nach Anspruch 1 oder 2 und einen Sockel (8) zwischen der Oberfläche des Geräts (9) bzw. der Gerätetür und der Griffstange (1).

6. Gerät oder Gerätetüre nach Anspruch 5, **dadurch gekennzeichnet, daß** der Sockel (8) die Schraube (7) vorzugsweise vollständig umgibt.

7. Gerät oder Gerätetüre nach Anspruch 5 oder 6, **dadurch gekennzeichnet, daß** der Sockel (8) an der Schraube (7) anliegt.

8. Gerätetüre nach einem der Ansprüche 5 bis 7, **dadurch gekennzeichnet, daß** der Sockel (8) in den Bereich zwischen der Schraube (7) und der Griffstange (1) eingreift.
